# EUROPEAN PATENT APPLICATION

(11) **EP 1 921 802 A1**
(43) Date of publication of application: **14.05.2008**
(21) Application number: 06797050.9
(22) Date of filing: 30.08.2006
(51) Int. Cl.: H04L 12/44

(54) **OPTICAL COMMUNICATION NETWORK SYSTEM, PARENT STATION OPTICAL COMMUNICATION DEVICE, AND CHILD STATION OPTICAL COMMUNICATION DEVICE**

(30) Priority: 31.08.2005 JP 2005252196
(71) Applicant: MITSUBISHI ELECTRIC CORPORATION, Chiyoda-ku Tokyo 100-8310 (JP); KDDI Corporation, Tokyo 163-8003 (JP)
(72) Inventor: NAKAGAWA, Junichi, Chiyoda-ku, Tokyo 100-8310 (JP); TANAKA, Keiji, Shinjuku-ku, Tokyo 163-8003 (JP); KUWAZURU, Masato, Shinjuku-ku, Tokyo 163-8003 (JP); EDAGAWA, Noboru, Shinjuku-ku, Tokyo 163-8003 (JP)
(74) Representative: Pfenning, Meinig & Partner GbR
(86) International application number: PCT/JP2006/317076
(87) International publication number: WO 2007/026749

(57) **Abstract**

In an optical communication network system, a central office and a plurality of user nodes are connected via an optical transmission path and a bidirectional communication is performed between the central office and the user nodes. The user nodes are divided into a plurality of groups. In a downstream channel communication, an individual downstream channel wavelength is allocated to each of the groups as a wavelength for a downstream communication, and for user nodes in a same group, the central office performs a downstream-signal communication by a same communication method using the individual downstream channel wavelength. In an upstream channel communication, all of the user nodes perform an upstream-signal communication with the central office using a single upstream channel wavelength as a wavelength for an upstream communication. A downstream signal from the central office is distributed to the groups for each individual downstream channel wavelength, and upstream signals from the user nodes are transmitted to the central office in a multiplexing manner.

## Description

### TECHNICAL FIELD

The present invention relates to an optical communication network system, a central-office optical communication device, and a user-node optical communication device, and more particularly, to a passive optical network (PON)-based optical communication network system for high-speed data communication in which 1-to-N communication is performed via an optical transmission path between a station device and a plurality of subscriber-side devices, and a central-office optical communication device and a user-node optical communication device for implementing the optical communication network system.

### BACKGROUND ART

A point-to-multipoint optical transmission system (an optical burst transmission/reception network) that is generally referred to as a PDS (passive double star) system or a PON (passive optical network) system is currently in use in an access-system network through which a multimedia service is provided to each household.

In the point-to-multipoint optical transmission system, a central office (OLT; optical line terminal, station device) is connected to a plurality of user nodes (ONU; optical network units, subscriber-side device) through optical fibers serving as optical transmission paths and a coupling device. A bidirectional communication is performed between the OLT and the ONUs in a way that upstream signals from the ONUs are transmitted to the OLT in response to a transmission enabling signal that is a downstream signal from the OLT by combining the signals in a time-division manner in the coupling device (a star coupler), and a downstream signal from the OLT is transmitted to each of the ONUs by being split in the coupling device. Because a single OLT is shared by a plurality of ONUs in this system, an optical transmission device and an optical fiber can be utilized economically.

Taking a Gigabit Ethernet-Passive Optical Network (GE-PON) defined in the IEEE 802.3ah as an example of such system, a station device OLT (optical line term: an optical subscriber line station device) is provided on a station side, and a plurality of subscriber-side device ONUs (optical network units: optical subscriber line terminal devices) are provided on a user premises side, being connected in a star shape via a wavelength multiplexing/demultiplexing device such as a star coupler.

The OLT has a function of distributing signals from another network device on an IP network side to a plurality of ONUs each of which is a destination for each of the signals and a function of multiplexing signals from the ONUs and outputting multiplexed signals to the network device on the IP network side. In addition, a time-division access control is performed to prevent a collision between the upstream signals from the subscriber-side devices on an optical fiber. An access protocol called MPCP (multi-point control protocol) is defined in the IEEE.

The ONUs have a function of terminating a signal from the OLT and converting the signal into a format that is supported by a user terminal as appropriate and outputting a converted signal to a user network interface and a function of converting a signal from the user terminal into a format on an optical fiber and outputting a converted signal at a timing specified by the OLT. Different wavelengths are allocated to an upstream channel and a downstream channel with the same wavelength allocated to the ONUs.

On the other hand, in the ITU-T (International Telecommunications Union-Telecommunications standardization sector) G.983.3, a configuration is disclosed in which a second wavelength for transmitting a video signal is additionally allocated to the downstream channel. With this configuration, although each of the ONUs necessitates two photodetectors, it can receive a video signal in addition to performing a data communication.

While a single fixed wavelength is used in each of the upstream and downstream channels in the IEEE 802.3ah or in the ITU-T G. 983. 3, a technology of allocating an independent wavelength to each of the ONUs in the downstream channel is proposed. For example, a technology is proposed in which an optical circuit, which is arranged between a station device and subscriber-side devices instead of a star coupler, functions as a wavelength demultiplexing device for downstream signals and an optical coupling device for upstream optical signals of a single wavelength, for building an optical communication network system in which the station device and the subscriber-side devices are connected in a star shape with a large capacity at a low facility cost (see, for example, Patent Document 1).

The optical access service employs an optical fiber infrastructure connecting each household or office to a station of a telecommunication provider. To improve a service menu or an access speed along with the development of a technology, it is important to utilize the existing infrastructure as it is from an economical standpoint. Moreover, it is desirable to add a new service on the same optical fiber without changing currently-installed subscriber-side devices, so that existing users can use existing subscriber-side devices as they used to.

Patent Document 1: Japanese Patent Application Laid-open No. 2002-217837

### DISCLOSURE OF INVENTION

### PROBLEM TO BE SOLVED BY THE INVENTION

However, in the IEEE 802.3ah, it is not taken into account to add a system with a new access speed while using previously-installed subscriber-side devices.

Although an allocation of an additional wavelength can be one of the methods of providing a new service or a new access speed as described above, for example, the scheme proposed in ITU-T is for a video service, so that a subscriber-side device needs to include two photodetectors for two wavelengths for a data communication and a video service, respectively. Furthermore, the existing data communication system itself cannot be renewed.

In a system disclosed in Patent Document 1, a different downstream wavelength is used in each of the subscriber-side devices as described above. However, if a system suggested in the IEEE 802.3ah is currently in use, the system disclosed in Patent Document 1 cannot be used together with the current system for an extension of a service or the system because a plurality of subscriber-side devices in the current system share the same downstream wavelength. Furthermore, an expensive optical circuit for distributing optical signals in the downstream channel for each wavelength is needed because a simple star coupler cannot be used.

Accordingly, for this reason, when an optical access system in which a single wavelength is used in each of the upstream and downstream channels has already been installed, a problem arises in that there is a limitation in adding a new system to a currently-used optical fiber system, so that there is no room for upgrading the system to provide a new service or an access speed.

The present invention is made in view of the above problems. It is an object of the present invention to provide an optical communication network system, a central-office optical communication device, and a user-node optical communication device that can easily support a new system with a capability of adding an upgrade system as appropriate.

### MEANS FOR SOLVING PROBLEM

To solve the above problems and to achieve the object, in an optical communication network system according to the present invention, a central office and a plurality of user nodes are connected via an optical transmission path and a bidirectional communication is performed between the central office and the user nodes. The user nodes are divided into a plurality of groups. In a downstream channel communication, an individual downstream channel wavelength is allocated to each of the groups as a wavelength for a downstream communication, and for user nodes in a same group, the central office performs a downstream-signal communication by a same communication method using the individual downstream channel wavelength. In an upstream channel communication, all of the user nodes perform an upstream-signal communication with the central office using a single upstream channel wavelength as a wavelength for an upstream communication. A downstream signal from the central office is distributed to the groups for each individual downstream channel wavelength, and upstream signals from the user nodes are transmitted to the central office in a multiplexing manner.

### EFFECT OF THE INVENTION

According to the present invention, a plurality of subscriber-side devices are divided into a plurality of groups to each of which one wavelength is allocated in downstream communication and in each of which the same communication system is adopted. Moreover, one wavelength is allocated to upstream communication, and a transmission for the upstream communication is controlled in a time division manner. Furthermore, when upgrading to a new system, it is possible to simplify communication control at a station device in downstream communication and a configuration of a subscriber-side device, enabling to implement a low-cost optical communication network system and its upgrade.

Consequently, according to the present invention, it is possible to obtain the optical communication network system that can easily support a new system and to which an upgrade system can be added as appropriate.

### BRIEF DESCRIPTION OF DRAWINGS

[Fig. 1] Fig. 1 is a schematic diagram of an optical communication network system according to a first embodiment of the present invention.
[Fig. 2] Fig. 2 is a schematic diagram of an example of a station device OLT in the optical communication network system according to the first embodiment of the present invention.
[Fig. 3-1] Fig. 3-1 is a schematic diagram of an example of a subscriber-side device ONU in the optical communication network system according to the first embodiment of the present invention.
[Fig. 3-2] Fig. 3-2 is a schematic diagram of an example of a subscriber-side device ONU in the optical communication network system according to the first embodiment of the present invention.
[Fig. 4-1] Fig. 4-1 is a schematic diagram for explaining an upgrading of the optical communication network system according to a second embodiment of the present invention.
[Fig. 4-2] Fig. 4-2 is a schematic diagram for explaining an upgrading of the optical communication network system according to the second embodiment of the present invention.

### EXPLANATIONS OF LETTERS OR NUMERALS

- 1: Station-side device OLT
- 2: Star coupler
- 3: Subscriber-side device ONU
- 4: Trunk-line optical fiber
- 11: Station-side device OLT
- 31, 31-1 to 31-m: Subscriber-side device ONU
- 32, 32-1 to 32-n: Subscriber-side device ONU
- 51: Branch-line optical fiber
- 52: Branch-line optical fiber
- 101: OLT-side PON processor
- 102: OLT-side optical receiving unit
- 104: OLT-side wavelength demultiplexing/multiplexing unit
- 113: λ1 OLT-side optical transmitting unit
- 123: λ2 OLT-side optical transmitting unit
- 311: ONU-side wavelength demultiplexing unit
- 312: ONU-side optical transmitting unit
- 313: Blocking filter
- 314: ONU-side optical receiving unit
- 315: ONU-side PON processor
- 321: ONU-side wavelength demultiplexing unit
- 322: ONU-side optical transmitting unit
- 323: Blocking filter
- 324: ONU-side optical receiving unit
- 325: ONU-side PON processor

### BEST MODE(S) FOR CARRYING OUT THE INVENTION

An optical communication network system, a central-office optical communication device, and a user-node optical communication device according to embodiments of the present invention are explained in detail below with reference to the accompanying drawings. The present invention is not limited to the following description and can be appropriately altered without departing from a gist of the present invention.

### First Embodiment

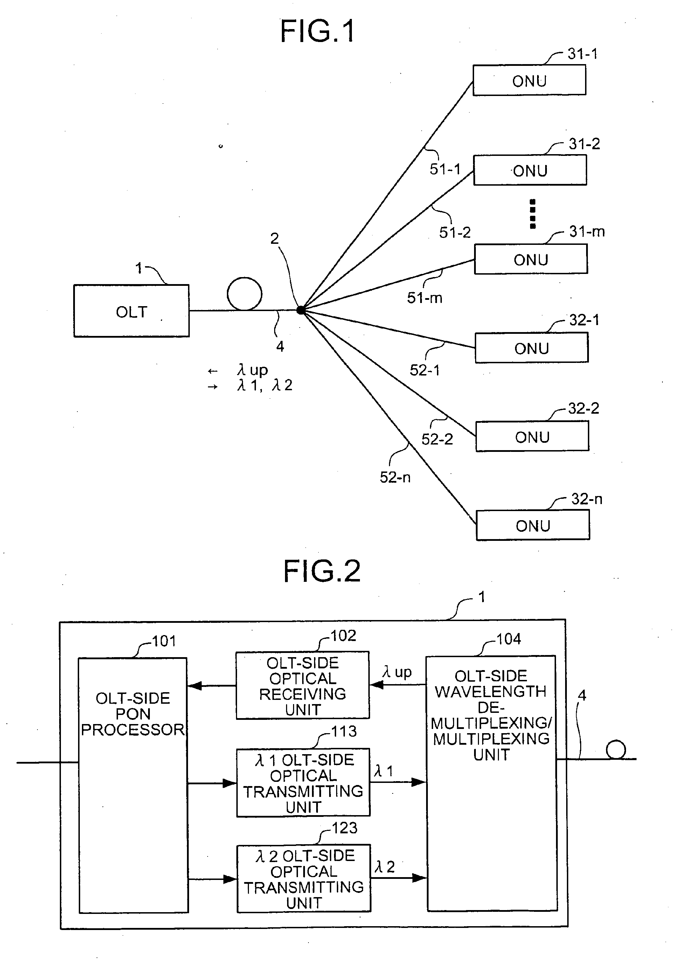

Fig. 1 is a schematic diagram of an optical communication network system according to a first embodiment of the present invention. The optical communication network system according to the embodiment provides various services such as a service to access the Internet from households or offices and a service to form a virtual closed-area network between companies. In this case, a station of a telecommunication provider is connected to the households or the offices with optical fibers, and a plurality of users share one trunk-line optical fiber.

As shown in Fig. 1, a station-side device (a central office, hereinafter, referred to as an OLT) 1 and two types of subscriber-side devices (user nodes, hereinafter, referred to as ONUs) 31-1 to 31-m and ONU 32-1 to ONU 32-n (hereinafter, the subscriber-side devices can be referred to as a subscriber-side device ONU 3, and the subscriber-side device ONUs 31-1 to 31-m can be referred to as a subscriber-side device ONU 31 and the subscriber-side device ONUs 32-1 to 31-n be referred to as a subscriber-side device ONU 32) are connected via an optical coupler (a star coupler) 2 with a trunk-line optical fiber 4 and a plurality of branch-line optical fibers 51-1, 51-2, ···51-m, 52-1, 52-2, ...52-n (hereinafter, the branch-line optical fibers 51-1 to 51-m can be referred to as a branch-line optical fiber 51 and the branch-line optical fibers 52-1 to 52-n can be referred to as a branch-line optical fiber 52) in the optical communication network system according to the embodiment. The station-side device OLT 1 is connected to an upper-class device (not shown) on an IP network side such as a switching device, a router device, or a server device. On the other hand, terminal devices (not shown) are connected to the subscriber-side device ONUs 3.

First, a configuration of the station-side device OLT 1 is explained. The station-side device OLT 1 has a function of transmitting signals from the switching device, the router device, or the server device on the IP network side to the specified subscriber-side device ONU 31-1 to ONU 31-m and ONU 32-1 to ONU 32-n, and a function of multiplexing signals from the subscriber-side device ONU 31-1 to ONU 31-m and ONU 32-1 to ONU 32-n and outputting a multiplexed signal to the upper-class device such as the switching device, the router device, or the server device on the IP network side.

Fig. 2 is a schematic diagram of the station-side device OLT 1. As shown in Fig. 2, the station-side device OLT 1 includes an OLT-side PON processor 101, an OLT-side optical receiving unit 102, a λ1 OLT-side optical transmitting unit 113, a λ2 OLT-side optical transmitting unit 123, and an OLT-side wavelength demultiplexing/multiplexing unit 104.

When the station-side device OLT 1 receives a downstream-data signal from the upper-class device on the IP network side, the OLT-side PON processor 101 identifies the downstream-data signal and determines the destination of the downstream-data signal based on an address signal included therein. Then, the OLT-side PON processor 101 transmits the downstream-data signal to the λ1 OLT-side optical transmitting unit 113 or the λ2 OLT-side optical transmitting unit 123 according to the destination.

When the OLT-side PON processor 101 receives an upstream-data signal from the OLT-side optical receiving unit 102, the OLT-side PON processor 101 identifies the upstream-data signal and determines the destination to which the upstream-data signal is sent based on an address signal included therein. Then, the OLT-side PON processor 101 transmits the upstream-data signal to the upper-class device such as the switching device, the router device, or the server device on the IP network side. The OLT-side PON processor 101 also functions as a signal returning unit that returns an upstream-data signal from the subscriber-side device ONUs 3 back to an optical transmission path as downstream-data signals by controlling transmission and reception of data between the subscriber-side device ONUs 3.

The OLT-side optical receiving unit 102 as an optical receiving unit is an O/E circuit unit that converts an upstream-data signal with a wavelength of λᵤₚ transmitted by the OLT-side wavelength demultiplexing/multiplexing unit 104 from an optical signal into an electric signal. The OLT-side optical receiving unit 102 transmits the upstream-data signal with a wavelength of λᵤₚ converted into the electric signal to the OLT-side PON processor 101.

The λ1 OLT-side optical transmitting unit 113 as an optical transmitting unit is an E/O circuit unit that converts a downstream-data signal from the OLT-side PON processor 101 from an electric signal into an optical signal with a wavelength of λ1. The λ1 OLT-side optical transmitting unit 113 transmits the downstream-data signal that is converted into the optical signal with a wavelength of λ1 to the OLT-side wavelength demultiplexing/multiplexing unit 104.

The λ2 OLT-side optical transmitting unit 123 as an optical transmitting unit is an E/O circuit unit that converts a downstream-data signal from the OLT-side PON processor 101 from an electric signal into an optical signal with a wavelength of λ2. The λ2 OLT-side optical transmitting unit 123 transmits the downstream-data signal that is converted into the optical signal with a wavelength of λ2 to the OLT-side wavelength demultiplexing/multiplexing unit 104.

The OLT-side wavelength demultiplexing/multiplexing unit 104 is connected to the trunk-line optical fiber 4. When the OLT-side wavelength demultiplexing/multiplexing unit 104 receives an upstream-data signal (an optical signal) with a wavelength of λᵤₚ through the trunk-line optical fiber 4, the OLT-side wavelength demultiplexing/multiplexing unit 104 transmits the upstream-data signal to the OLT-side optical receiving unit 102. The OLT-side wavelength demultiplexing/multiplexing unit 104 multiplexes downstream-data signals (optical signals) transmitted from the λ1 OLT-side optical transmitting unit 113 and the λ2 OLT-side optical transmitting unit 123 and transmits a multiplexed signal through the trunk-line optical fiber 4 to the subscriber-side device ONUs 3.

A configuration of the subscriber-side device 3 is explained. The subscriber-side device ONU 31-1 to ONU 31-m and ONU32-1 to ONU 32-n each receive and terminate a downstream-data signal with a predetermined wavelength that is transmitted from the station-side device OLT 1. The subscriber-side device ONU 31-1 to ONU 31-m and ONU 32-1 to ONU 32-n each have a function of extracting the signal addressed to a local subscriber-side device and outputting the extracted signal through a user network interface to a terminal device (not shown) after converting the received downstream-data signal into an electric signal. In addition, the subscriber-side device ONU 31-1 to ONU 31-m and ONU 32-1 to ONU 32-n each have a function of converting a format of the received downstream-side signal and routing the received downstream-side signal as needed.

The subscriber-side device ONU 3 processes management information between the station-side device OLT 1 and the subscriber-side device ONU 3 inside the subscriber-side device ONU 3 without outputting it to the user network interface. Meanwhile, the subscriber-side device ONU 3 has a function of converting a signal from the terminal device into an appropriate format, converting an electric signal to an optical signal, and transmitting the optical signal at an appropriate timing and with a predetermined upstream wavelength to the station-side device OLT 1.

In the optical communication network system according to the embodiment, the subscriber-side device ONU 31-1 to the subscriber-side device ONU 31-m have a different system from that of the subscriber-side device 32-1 to the subscriber-side device 32-n. For example, transmission speeds and signal formats are different in downstream communication. A wavelength of λ1 is allocated to the subscriber-side device ONU 31-1 to the subscriber-side device ONU 31-m, and a wavelength of λ2 is allocated to the subscriber-side device ONU 32-1 to the subscriber-side device ONU 32-n.

The same wavelength of λᵤₚ is allocated to all of the subscriber-side device ONUs 3 for communication in an upstream channel, so that all of the subscriber-side device ONUs 3 use the same wavelength of λᵤₚ for communication in the upstream channel.

Wavelengths that are different from the wavelength of λᵤₚ for communication in the upstream channel are allocated to the subscriber-side device ONUs 31 and the subscriber-side device ONUs 32 as downstream wavelengths, respectively, for communication in a downstream channel. That is, the dedicated wavelength of λ1 is allocated to the subscriber-side device ONUs 31 as a downstream wavelength, and the dedicated wavelength of λ2 is allocated to the subscriber-side device ONUs 32 as a downstream wavelength.

Each of the subscriber-side device ONUs 3 includes a single photodetecting unit designed to receive only a predetermined wavelength. Thus, for example, the subscriber-side device ONU 31-1 receives only a signal with a wavelength of λ1 and blocks a signal with a wavelength of λ2 allocated to the subscriber-side device ONU 32-1 to the subscriber-side device ONU 32-n. Likewise, for example, the subscriber-side device ONU 32-1 receives only a signal with a wavelength of λ2 and blocks a signal with a wavelength λ1 allocated to the subscriber-side device ONU 31-1 to the subscriber-side device ONU 31-m. Therefore, downstream signals do not interfere with each other between the subscriber-side device ONUs employing different systems in the optical communication network system.

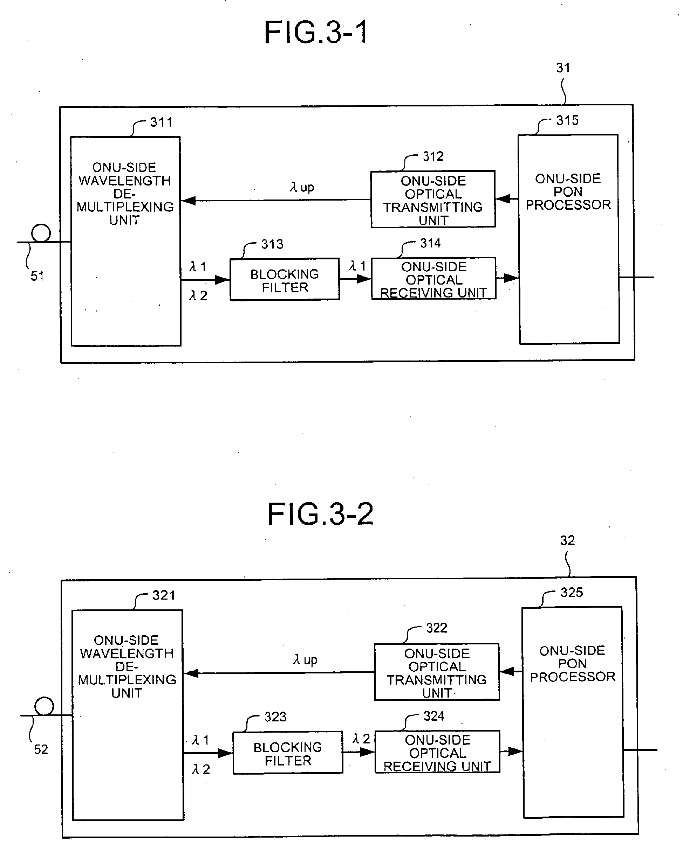

Fig. 3-1 is a schematic diagram of the subscriber-side device ONU 31, and Fig. 3-2 is a schematic diagram of the subscriber-side device ONU 32. The subscriber-side device ONU 31 shown in Fig. 3-1 includes an ONU-side wavelength demultiplexing unit 311, an ONU-side optical transmitting unit 312, a blocking filter 313, an ONU-side optical receiving unit 314, and an ONU-side PON processor 315.

The ONU-side wavelength demultiplexing unit 311 is connected to the branch-line optical fiber 51. When the ONU-side wavelength demultiplexing unit 311 receives a downstream-data signal (an optical signal) with a wavelength of λ1 or a wavelength of λ2 through the branch-line optical fiber 51, the ONU-side wavelength demultiplexing unit 311 demultiplexes the downstream-data signal (the optical signal) and transmits demultiplexed signals to the blocking filter 313. The ONU-side wavelength demultiplexing unit 311 transmits both of the downstream-data signal with a wavelength of λ1 and the downstream-data signal with a wavelength of λ2 to the blocking filter 313.

When the ONU-side wavelength demultiplexing unit 311 receives an upstream-data signal converted into an optical signal with a wavelength of λᵤₚ from the ONU-side optical transmitting unit 312, the ONU-side wavelength demultiplexing unit 311 transmits the upstream-data signal through the branch-line optical fiber 51 to the station-side device OLT 1.

The ONU-side optical transmitting unit 312 is an optical transmitting unit, which is an E/O circuit unit for converting the upstream-data signal from the ONU-side PON processor 315 from an electric signal into an optical signal with a wavelength of λᵤₚ. The ONU-side optical transmitting unit 312 transmits the upstream-data signal converted into the optical signal with a wavelength of λᵤₚ to the ONU-side wavelength demultiplexing unit 311.

The blocking filter 313 functions as a wavelength filter and allows only a specific wavelength to pass therethrough. Specifically, the blocking filter 313 identifies wavelengths of downstream-data signals from the ONU-side wavelength demultiplexing unit 311 and transmits only a downstream-data signal with a wavelength of λ1 to the ONU-side optical receiving unit 314. When the blocking filter 313 receives a downstream-data signal with a wavelength of λ2, the blocking filter 313 discards the downstream-data signal.

A wavelength of 1490 nm is typically allocated to a downstream-data signal in a PON system. Moving-image distribution is planned to be performed by using a wavelength of 1550 nm in the future. Because a subscriber-side device ONU that does not correspond to the moving-image distribution receives only signals with the wavelength of 1490 nm, a blocking filter that does not allow signals with the wavelength of 1550 nm to pass therethrough is often built in the subscriber-side device ONU.

The ONU-side optical receiving unit 314 as an optical receiving unit is an O/E circuit unit that converts the downstream-data signal with a wavelength of λ1 transmitted after filtering through the blocking filter 313 from the optical signal into an electric signal. The ONU-side optical receiving unit 314 transmits the downstream-data signal with a wavelength of λ1 that is converted into the electric signal to the ONU-side PON processor 315.

The ONU-side PON processor 315 identifies the downstream-data signal with a wavelength of λ1 that is converted into the electric signal and transmitted from the ONU-side optical receiving unit 314, and determines the destination of the downstream-data signal based on an address signal contained therein. The ONU-side PON processor 315 extracts only the signal addressed to the local device, and outputs the signal via the user network interface to a terminal device connected to the local device. When the ONU-side PON processor 315 receives an upstream-data signal from a terminal device connected to the local device, the ONU-side PON processor 315 identifies the upstream-data signal, determines the destination to which the upstream-data signal is transmitted based on an address signal contained therein, and transmits the upstream-data signal to the ONU-side optical transmitting unit 312.

As shown in Fig. 3-2, the subscriber-side device ONU 32 includes an ONU-side wavelength demultiplexing unit 321, an ONU-side optical transmitting unit 322, a blocking filter 323, an ONU-side optical receiving unit 324, and an ONU-side PON processor 325.

The ONU-side wavelength demultiplexing unit 321 is connected to the branch-line optical fiber 52. When the ONU-side wavelength demultiplexing unit 321 receives a downstream-data signal (an optical signal) with a wavelength of λ1 or a wavelength of λ2 through the branch-line optical fiber 52, the ONU-side wavelength demultiplexing unit 321 demultiplexes the downstream-data signal (the optical signal) and transmits demultiplexed signals to the blocking filter 323. The ONU-side wavelength demultiplexing unit 321 transmits both of the downstream-data signal with a wavelength of λ1 and the downstream-data signal with a wavelength of λ2 to the blocking filter 323.

The ONU-side optical transmitting unit 322 as an optical transmitting unit is an E/O circuit unit that converts the upstream-data signal from the ONU-side PON processor 325 from the electric signal into an optical signal with a wavelength of λᵤₚ. The ONU-side optical transmitting unit 322 transmits the upstream-data signal converted into the optical signal with a wavelength of λᵤₚ to the ONU-side wavelength demultiplexing unit 321.

The blocking filter 323 functions as a wavelength filter and allows only a specific wavelength to pass therethrough. Specifically, the blocking filter 323 identifies wavelengths of downstream-data signals transmitted from the ONU-side wavelength demultiplexing unit 321 and transmits only a downstream-data signal with a wavelength of λ2 to the ONU-side optical receiving unit 324. When the blocking filter 323 receives a downstream-data signal with a wavelength of λ1, the blocking filter 323 discards the downstream-data signal.

The wavelength of 1490 nm is typically allocated to a downstream-data signal in a PON system. Moving-image distribution is planned to be performed by using the wavelength of 1550 nm in the future. Because a subscriber-side device ONU that does not correspond to the moving-image distribution receives only signals with the wavelength of 1490 nm, a blocking filter that does not allow signals with the wavelength of 1550 nm to pass therethrough is often built in the subscriber-side device.

The ONU-side optical receiving unit 324 as an optical receiving unit is an O/E circuit unit that converts a downstream-data signal with a wavelength of λ2 transmitted after filtering through the blocking filter 323 from the optical signal into an electric signal. The ONU-side optical receiving unit 324 transmits the downstream-data signal with a wavelength of λ2 that is converted into the electric signal to the ONU-side PON processor 325.

The ONU-side PON processor 325 identifies the downstream-data signal with a wavelength of λ2 that is converted into an electric signal and transmitted from the ONU-side optical receiving unit 324, and determines the destination of the downstream-data signal based on an address signal contained therein. The ONU-side PON processor 325 extracts only the signal addressed to the local device and outputs the signal via the user network interface to a terminal device connected to the local device. When the ONU-side PON processor 325 receives an upstream-data signal from a terminal device connected to the local device, the ONU-side PON processor 325 identifies the upstream-data signal, determines the destination to which the upstream-data signal is transmitted based on an address signal contained therein, and transmits the upstream-data signal to the ONU-side optical transmitting unit 322.

As described above, according to the optical communication network system in the present embodiment, the subscriber-side device ONUs 31 and the subscriber-side device ONUs 32 adopt different systems, respectively. For example, the subscriber-side device ONUs 31 can use the B-PON defined in ITU-T and the subscriber-side device ONUs 32 can use the GE-PON defined in the IEEE. Alternatively, the subscriber-side device ONUs 31 can use the GE-PON with 1Gb/s defined in the IEEE, and the subscriber-side device ONUs 32 can use the 10-Gigabit Ethernet-Passive Optical Network (10GE-PON) in which a transmission speed is ten times higher or use a new PON system in which a transmission speed only in the downstream channel is increased. The systems are explained as examples, and other systems can also be adopted.

The star coupler 2 functions as a wavelength demultiplexing means for an optical data signal, and distributes the downstream-data signal (the optical signal) transmitted from the station-side device OLT 1 to each of the subscriber-side device ONU 31-1 to the subscriber-side device ONU 31-m and the subscriber-side device ONU 32-1 to the subscriber-side device ONU 32-n.

The star coupler 2 also functions as a data-signal combining means, and combines upstream-data signals (optical signals) transmitted from the subscriber-side device ONU 31-1 to the subscriber-side device ONU 31-m and the subscriber-side device ONU 32-1 to the subscriber-side device ONU 32-n by performing a time-division multiplexing.

An operation of the optical communication network system according to the embodiment configured in the above manner is explained. First, a downstream-data signal processing is explained. When the station-side device OLT 1 receives a downstream-data signal from the upper-class device on the IP network side such as the switching device, the router device, or the server device, the OLT-side PON processor 101 identifies the downstream-data signal and determines the destination to which the downstream-data signal is transmitted based on an address signal included therein.

An explanation is particularly given, for example, about a case in which the destination of the downstream-data signal is the subscriber-side device ONU 31-2. When the OLT-side PON processor 101 determines that the destination of the downstream-data signal is the subscriber-side device ONU 31-2, the OLT-side PON processor 101 transmits the downstream-data signal to the λ1 OLT-side optical transmitting unit 113. When the λ1 OLT-side optical transmitting unit 113 receives the downstream-data signal, the λ1 OLT-side optical transmitting unit 113 converts the downstream-data signal into an optical signal with a wavelength of λ1, and transmits a converted optical signal to the OLT-side wavelength demultiplexing/multiplexing unit 104. Downstream-data signals addressed to other subscriber-side device ONUs 31 and the subscriber-side device ONUs 32 are also transmitted to the OLT-side wavelength demultiplexing/multiplexing unit 104.

When the OLT-side wavelength demultiplexing/multiplexing unit 104 receives the downstream-data signal converted into the optical signal with a wavelength of λ1, the OLT-side wavelength demultiplexing/multiplexing unit 104 separates the downstream-data signal and the upstream-data signal that are input to the OLT-side wavelength demultiplexing/multiplexing unit 104 itself, multiplexes the downstream-data signal converted into the optical signal with a wavelength of λ1 with a downstream-data signal (an optical signal) with a wavelength of (λ2), and transmits a multiplexed signal through the trunk-line optical fiber 4 to the star coupler 2.

The multiplexed optical signal that is sent to the star coupler 2 through the trunk-line optical fiber 4 is distributed for each wavelength at the star coupler 2 to each of the subscriber-side device ONU 31-1 to the subscriber-side device ONU 31-m and the subscriber-side device ONU 32-1 to the subscriber-side device ONU 32-n through the branch-line optical fibers 51 and 52.

The subscriber-side device ONU 31-1 to the subscriber-side device ONU 31-m can extract and receive only the downstream optical signal with a wavelength of λ1 among downstream optical signals. When the downstream-data signal with a wavelength of λ1 (the optical signal) transmitted from the station-side device OLT 1 is sent to each of the subscriber-side device ONU 31-1 to the subscriber-side device ONU 31-m, the ONU-side wavelength demultiplexing unit 311 demultiplexes the downstream-data signal and transmit demultiplexed downstream-data signals to the blocking filter 313. The ONU-side wavelength demultiplexing unit 311 of the subscriber-side device ONU 31 transmits the downstream-data signal with a wavelength of λ1 and the downstream-data signal with a wavelength of λ2 to the blocking filter 313.

When the blocking filter 313 of each of the subscriber-side device ONUs 31 receives the downstream optical signals, the blocking filter 313 selects only the downstream-data signal (an optical signal) with a wavelength of λ1 and transmits the selected downstream-data signal to the ONU-side optical receiving unit 314 of each of the subscriber-side device ONUs 31. The blocking filter 313 discards the downstream-side signal (the optical signal) other than the downstream-data signal with a wavelength of λ1, that is, the downstream-data signal (the optical signal) with a wavelength of λ2.

The ONU-side optical receiving unit 314 of each of the subscriber-side device ONUs 31 receives the downstream-data signal (the optical signal) transmitted from the blocking filter 313, converts the downstream-data signal into an electric signal, and transmits a converted electric signal to the ONU-side PON processor 315. The ONU-side PON processor 315 of each of the subscriber-side device ONUs 31 determines the destination based on the downstream-data signal that is converted into the electric signal and transmitted from the ONU-side optical receiving unit 314. Only the ONU-side PON processor 315 of the subscriber-side device ONU 31-2 that is the destination of the downstream-data signal outputs the downstream-data signal (the optical signal) to a terminal device through the user network interface.

The downstream-data signal (the optical signal) is discarded in other subscriber-side device ONUs 31, i.e., in the ONU-side PON processors 315 of the subscriber-side device ONU 31-1 and the subscriber-side device ONU 31-3 to the subscriber-side device ONU 31-m. On the other hand, because the optical signal with a wavelength of λ1 is blocked at each of the blocking filters 323 of the subscriber-side device ONU 32-1 to the subscriber-side device ONU 32-n, the downstream data is not sent to the user network interfaces of the subscriber-side device ONUs 32.

The downstream data from the upper-class device on the IP network side is transmitted only to the terminal device of the subscriber-side device ONU 31-2 by the above processing. When a destination to which a downstream data is transmitted is any one of the subscriber-side device ONUs 32, the same processing as the above is performed, thereby enabling the downstream data from the upper-class device to be transmitted only to a terminal device of a desired subscriber-side device ONU 32.

An upstream-data signal processing is explained. The explanation is given particularly about a case in which an upstream-data signal is transmitted from a terminal device of the subscriber-side device ONU 31-2. When the upstream-data signal (the electric signal) from the terminal device of the subscriber-side device ONU 31-2 is sent to the subscriber-side device ONU 31-2, the ONU-side PON processor 315 identifies the data signal and determines the destination to which the upstream-data signal is transmitted based on an address signal included therein.

When the ONU-side PON processor 315 determines that the destination to which the upstream-data signal (the electric signal) is transmitted is an upper-class device of the station-side device OLT 1, the ONU-side PON processor 315 transmits the upstream-data signal (the electric signal) to the ONU-side optical transmitting unit 312. When the ONU-side optical transmitting unit 312 receives the upstream-data signal (the electric signal), the ONU-side optical transmitting unit 312 converts it into an optical signal with a wavelength of λᵤₚ and transmits a converted optical signal to the ONU-side wavelength demultiplexing unit 311. According to the optical communication network system of the present embodiment, the same wavelength of λᵤₚ is used in all of the subscriber-side device ONUs 3 for upstream-data signal communication.

When the ONU-side wavelength demultiplexing unit 311 receives the upstream-data signal (the optical signal), the ONU-side wavelength demultiplexing unit 311 separates the upstream-data signal from other downstream-data signals transmitted to the ONU-side wavelength demultiplexing unit 311 itself and transmits the upstream-data signal (the optical signal) through the branch-line optical fiber 51 to the star coupler 2. The star coupler 2 combines the upstream-data signal (the optical signal) with other upstream-data signals (the optical signal) transmitted from other subscriber-side device ONUs 31 and the subscriber-side devices ONU 32 by performing a time division multiplexing, and transmits a combined signal to the station-side device OLT 1 through the trunk-line optical fiber 4.

In the station-side device OLT 1, after the upstream-data signal (the optical signal) with a wavelength of λᵤₚ is sent, the OLT-side wavelength demultiplexing/multiplexing unit 104 separates the upstream-data signal (the optical signal) from other downstream-data signals transmitted to the OLT-side wavelength demultiplexing/multiplexing unit 104 itself, and transmits the upstream-data signal to the OLT-side optical receiving unit 102.

When the OLT-side optical receiving unit 102 receives the upstream-data signal (the optical signal), the OLT-side optical receiving unit 102 converts the upstream-data signal from the optical signal into an electric signal and transmits a converted upstream-data signal to the OLT-side PON processor 101. When the OLT-side PON processor 101 receives the upstream-data signal (the electric signal), the OLT-side PON processor 101 determines the destination to which the upstream-data signal is output based on an address signal included therein. Then, the upstream-data signal (the electric signal) is transmitted to a predetermined upper-class device on the IP network side.

The upstream-data signal transmitted from the subscriber-side device ONU 31 can be transmitted to the predetermined upper-class device on the IP network side by the above processing.

As described above, according to the optical communication network system in the present embodiment, all of the subscriber-side device ONUs 3 use the same wavelength of λᵤₚ for upstream-data signal communication. Therefore, the station-side device OLT 1 needs to perform a communication control. The above control is implemented, for example, by using the MPCP defined in the IEEE. Because the same wavelength of λᵤₚ is used in the upstream channel in a state in which the plural types of the subscriber-side device ONUs 3 are connected, the station-side device OLT 1 performs a communication control by or mainly by a time division multiplexing. The station-side device OLT 1 can have a band controlling function that is referred to as dynamic band allocation to ensure fairness or a band allocation based on the contracts among the subscriber-side device ONUs 3.

According to the above optical communication network system in the present embodiment, the subscriber-side device ONUs that employ a plurality of different PON communication systems can be accommodated on the same optical fiber by allocating different wavelengths to the subscriber-side device ONUs that employ a plurality of different PON communication systems. Moreover, when new subscriber-side device ONUs are added, subscriber-side device ONUs of a group that uses a new PON communication system directed to a new service are allocated with a wavelength and a function of the station-side device OLT is updated while continuing to provide the present service to the existing users as it is without removing the already-installed subscriber-side device ONUs. In this manner, the new subscriber-side device ONUs are added on the same optical fiber. Consequently, the optical communication network system can be upgraded by adding subscriber-side device ONUs that use a plurality of different PON communication systems while utilizing the existing facilities.

According to the above optical communication network system in the present embodiment, a plurality of subscriber-side devices are divided into a plurality of groups, one wavelength is allocated to each of the groups for communication in the downstream channel, and the same communication system is used in each group. This makes it possible to simplify a communication control in the downstream channel in the station device. Moreover, it is possible to implement the optical communication network system with a simple configuration because a simple star coupler can be used in the same manner as in a conventional example instead of using an optical circuit, in which distribution is performed based on a wavelength, as an infrastructure.

According to the optical communication network system in the present embodiment, a single wavelength is allocated for communication in the upstream channel and a transmission is controlled based on the time-division multiplexing communication system independently from the PON communication system. Therefore, because there is no need to use a different wavelength at each of the subscriber-side device ONUs, it is unnecessary to use a subscriber-side device ONU that includes a light source by which a plurality of wavelengths can be selected or to prepare a plurality of subscriber-side device ONUs in which different wavelengths are generated. Thus, the low-cost optical communication network system and its upgrade can be implemented.

According to the optical communication network system in the present embodiment, it is possible to provide the optical communication network system that can easily support a new system and can add an upgrading method as appropriate.

### Second Embodiment

According to a present embodiment, an explanation is given about a case in which the optical communication network system is updated (upgraded) by introducing a PON system in which a new PON communication system is adopted while utilizing the subscriber-side device ONUs that have been already used at households or offices for introducing a new communication service to the optical communication network system that has been already established.

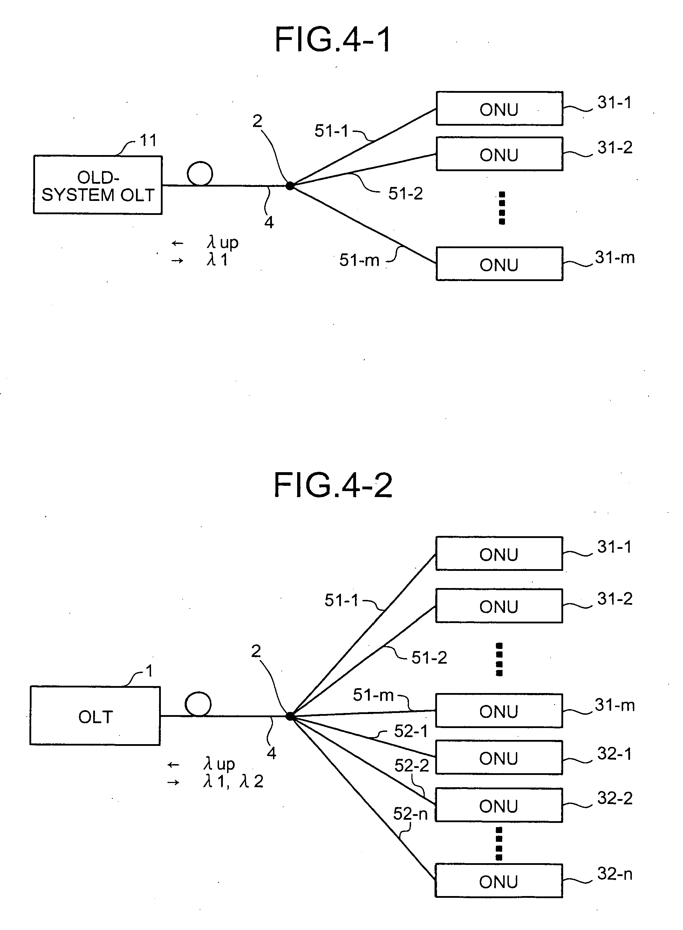

First, the optical communication network system that has been already deployed is explained. In the optical communication network system that has been already deployed, for example as shown in Fig. 4-1, a station-side device OLT 11 and the subscriber-side device ONUs 31-1 to 31-m are connected through a single trunk-line optical fiber 4 and a plurality of branch-line optical fibers 51-1, 51-2, ..., 51-m with the star coupler 2 therebetween. An upper-class device (not shown) on an IP network side such as a switching device, a router device, or a server device is connected to the station-side device OLT 11. On the other hand, a terminal device (not shown) is connected to each of the subscriber-side device ONUs 31.

In the optical communication network system, the same wavelength of λᵤₚ is allocated to all of the subscriber-side device ONUs 3 for communication in the upstream channel. The upstream communication is performed using the same wavelength of λᵤₚ in all of the subscriber-side device ONUs 3.

Meanwhile, the same wavelength of λ1 is allocated to all of the subscriber-side device ONUs 31 for communication in the downstream channel. The downstream communication is performed using the same wavelength of λ1 in all of the subscriber-side device ONUs 3.

When an optical communication network system that employs a new system to provide a new service is introduced according to the present embodiment, a subscriber-side device ONU 32-1 to a subscriber-side device 32-n for the new system are newly installed while using the subscriber-side device ONU 31-1 to the subscriber-side device 31-m that are currently used at households or offices without discarding them and without changing the optical fiber infrastructure. Because a total cost for subscriber-side device ONUs is much larger than that for the OLT in the optical communication network system, easily upgrading the subscriber-side device ONUs for introducing a new service leads to a large burden in view of a cost.

Thus, according to the optical communication network system of the present embodiment, the subscriber-side device ONU 32-1 to the subscriber-side device 32-n for a new system are newly installed while using the subscriber-side device ONU 31-1 to the subscriber-side device 31-m that are currently installed at households or offices. At this time, although the station-side device OLT 11 supporting only the system that has already been introduced needs to be upgraded to the station device OLT 1 that supports both systems, it can be upgraded at low cost.

For example, as shown in Fig. 4-2, the station-side device OLT 11 is upgraded to the station-side device OLT 1, and the subscriber-side device ONU 32-1 to the subscriber-side device 32-n for the new system are newly introduced by connecting them to the star coupler 2 through branch-line optical fibers 52-1, 52-2, ..., 52-m, thereby enabling to build up the optical communication network system according to the first embodiment.

Therefore, according to the optical communication network system of the present embodiment, it is possible to introduce an optical communication network system for providing a new service at low cost while using the subscriber-side devices that are currently used at households or offices without discarding them and without changing an optical fiber infrastructure. Because the OLT is shared by a plurality of users, it is possible to reduce an increase of cost per a subscriber-side device ONU low enough to be accepted.

Various methods can be employed as a method for allocating a downstream wavelength. For example, there is a method of adding a wavelength every time a new system is introduced. Another example is to previously make the station device and the star coupler possible to set many wavelengths. In this case, it is possible to build up a new optical communication network system only by installing subscriber-side devices. Moreover, as still another example, first, a downstream wavelength of 1490 nm is allocated to a first system of ONUs, next, a downstream wavelength of 1550 nm is allocated to a new system that is a second system, and then, the downstream wavelength of 1490 nm is allocated again to a new system that is a third method on condition that the ONUs for the first system are removed. These are just examples, and other examples can of course be employed.

### INDUSTRIAL APPLICABILITY

As described above, the optical communication network system according to the present invention is useful for a passive optical network for high-speed data communication in which 1-to-N communication is performed via an optical transmission path between a central office device and a plurality of subscriber-side devices, and is suitable for an optical communication network system in which a new upgrade system is needed in the future.

## Claims

1. An optical communication network system in which a central office and a plurality of user nodes are connected via an optical transmission path and a bidirectional communication is performed between the central office and the user nodes, wherein
the user nodes are divided into a plurality of groups,
in a downstream channel communication, an individual downstream channel wavelength is allocated to each of the groups as a wavelength for a downstream communication, and for user nodes in a same group, the central office performs a downstream-signal communication by a same communication method using the individual downstream channel wavelength,
in an upstream channel communication, all of the user nodes perform an upstream-signal communication with the central office using a single upstream channel wavelength as a wavelength for an upstream communication, and
a downstream signal from the central office is distributed to the groups for each individual downstream channel wavelength, and upstream signals from the user nodes are transmitted to the central office in a multiplexing manner.

2. The optical communication network system according to claim 1, wherein in the upstream channel communication, a time-division multiplexing communication that is a communication method common to all of the user nodes is performed by all of the user nodes with respect to the central office by using the upstream channel wavelength.

3. The optical communication network system according to claim 1, wherein in the downstream channel communication, the central office determines a group to which a user node belongs by determining a user node as a destination of the downstream signal based on a downstream signal input to the central office, and performs the downstream-signal communication by using the individual downstream channel wavelength associated with the group.

4. The optical communication network system according to claim 1, wherein each of the user nodes includes a wavelength filtering unit that allows a downstream signal having a specific wavelength to pass.

5. The optical communication network system according to claim 4, wherein the user node obtains a signal addressed to the user node from the downstream signals that passed through the wavelength filtering unit, and discards signals other than the signal addressed to the user node.

6. The optical communication network system according to claim 1, wherein a communication with a new user node of a new group can be performed in addition to a communication with existing user nodes by adding the new user node of the new group as the user node and using an individual downstream channel wavelength associated with the new group in the central office.

7. The optical communication network system according to claim 1, wherein when existing group is not used any more, the individual downstream channel wavelength allocated to the existing group can be reallocated to a new group different from the existing group.

8. A central-office optical communication device for an optical communication network system in which a central office and a plurality of user nodes divided into a plurality of groups are connected via an optical transmission path and a bidirectional communication is performed between the central office and the user nodes, wherein
in a downstream channel communication, an individual downstream channel wavelength is allocated to each of the groups as a wavelength for a downstream communication, and for user nodes in a same group, a downstream-signal communication is performed by a same communication method using the individual downstream channel wavelength.

9. The central-office optical communication device according to claim 8, wherein in the downstream channel communication, a group to which a user node belongs is determined by determining a user node as a destination of a downstream signal based on an input downstream signal, and the downstream-signal communication is performed by using the individual downstream channel wavelength associated with the group.

10. The central-office optical communication device according to claim 8, wherein a communication with a new user node of a new group can be performed in addition to a communication with existing user nodes by adding the new user node of the new group as the user node and using an individual downstream channel wavelength associated with the new group.

11. The central-office optical communication device according to claim 8, wherein when existing group is not used any more, the individual downstream channel wavelength allocated to the existing group can be reallocated to a new group different from the existing group.

12. A user-node optical communication device for an optical communication network system in which a central office and a plurality of user nodes divided into a plurality of groups are connected via an optical transmission path and a bidirectional communication is performed between the central office and the user nodes, wherein
in an upstream channel communication, an upstream-signal communication is performed with a central office using a single upstream channel wavelength that is shared with other user nodes as a wavelength for an upstream communication.

13. The user-node optical communication device according to claim 12, wherein in the upstream channel communication, a time-division multiplexing communication that is a communication method common to the other user nodes is performed with respect to the central office by using the upstream channel wavelength.

14. The user-node optical communication device according to claim 12, further comprising a wavelength filtering unit that allows a downstream signal having a specific wavelength to pass.

15. The user-node optical communication device according to claim 14, wherein a signal addressed to a user node is obtained from the downstream signals that passed through the wavelength filtering unit, and signals other than the signal addressed to the user node are discarded.
